# EUROPEAN PATENT APPLICATION

(11) **EP 0 790 039 A1**
(43) Date of publication of application: **20.08.1997**
(21) Application number: 96830073.1
(22) Date of filing: 19.02.1996
(51) Int. Cl.: A61C 1/00, A61C 13/16, B29C 33/20

(54) **Apparatus for the production of a duplicate of a denture original and improved process for denture duplication**

(71) Applicant: Palazzolo, Santo, I-95125 Catania (IT)
(72) Inventor: Palazzolo, Santo, I-95125 Catania (IT)
(74) Representative: Bazzichelli, Alfredo

(57) **Abstract**

A flask apparatus for production of a duplicate of an original denture comprises a bottom mold (1) for the plaster cast of the gum portion, a top countermold (2) for the silicon polymer cast of the dental arch, and bolts (14) to lock the molds during the pressing of the imprint and production of the copy.

## Description

The present invention relates to a flask device for production of a copy or duplicate of an original denture, along with the relative process for reproduction of the denture using said apparatus.

The term denture is used in the present invention and in the claims to indicate both a fixed denture and a mobile denture, whether partial or total.

It is known that those who wear dentures have to have at least one copy of the latter in case of loss, breakage or unavailability of the original.

According to conventional technology, a second copy of the original denture requires an extremely length preparation time, which is comparable to the time required to prepare the original. The user is left without his or her denture for several days, and also has to spend time at a technical laboratory for the operations of preparing molds and selecting artificial teeth.

In effect the conventional technology used for production of a denture identical to the original is the same as that used to prepare the original itself, and likewise the cost is more or less comparable to that of preparing an original.

Italian patent No. 1,256,574 describes a process for duplicating an original denture, according to which the copy of an original denture can be made in an extremely short time and resulting in a product which cannot be obtained as such except using said process.

In effect the teeth are produced using a resin for formation of artificial teeth, which is polymerised in situ, and the teeth themselves are bonded to the "pink resin" tooth bearing structure (gum portion) by means of chemical fusion of the two resins. This constitutes the difference between this process and those of the prior art, in which, on the contrary, the artificial teeth are selected from pre-existing standard types normally available on the market, ready finished and polished, and these are then imprisoned in the pink resin gum mold without any welding together of the pink resin itself and the tooth.

As described in the patent mentioned above, the process is carried out inside a conventional flask, of the type used to produce plaster molds for general use in the field of odontotechny.

Although for ease of comprehension the apparatus according to the present invention is termed "flask apparatus", it in no way resembles a conventional odontotechnical flask. The apparatus according to the present invention has in fact been created to obtain the duplicate denture in an optimum form and in the fastest possible time, and said apparatus cannot be used in odontotechny for same purposes as the conventional flask mentioned above.

The apparatus according to the present invention further allows greater economy and increased automation in the production of the copy when compared with conventional flasks, and furthermore its use also involves an improvement in the process operations when compared with the prior art as described in the Italian patent mentioned above.

Thus, Italian patent No. 1,256,574 describes a process for duplication of an original denture, made up of a gum portion and a tooth portion, comprising the operations of: embedding the gum portion in a dental molding material to form a mold for the gum portion containing an impression thereof; embedding the tooth portion in a first polymerisable resin material in a releasing contiguous relationship with the mold for the gum portion; polymerizing the first resin material to form a mold for the tooth portion containing an impression thereof; separating the mold for the tooth portion and the mold for the gum portion and removing the original denture therefrom; filling the mold for the tooth portion with a second polymerizable resin material suitable for construction of artificial teeth and polymerizing this second resin material to obtain a duplicate dental arch of the original denture; separating off and cleaning each single tooth of said duplicate dental arch; placing the single teeth in their respective positions in the mold for the tooth portion, to reform the dental arch; filling the remaining space in the mold for the tooth portion with a third polymerizable resin suitable to form the gum base of a denture; filling the mold for the gum portion with the third polymerizable resin suitable to form the gum base of a denture; and placing the mold for the tooth portion and the mold for the gum portion in contiguous matching relationship and polymerizing the third polymerizable resin to obtain a duplicate of the original denture.

Carrying out this process in a flask for general odontotechny use involves a waste of material and the possibility of a certain amount of imprecision in the copy of the denture, due to the fact that conventional flasks have a much greater capacity than that required to carry out the process in question, which also involves a certain amount of imprecision in reproduction of the impression which, although not a problem in conventional odontotechny use, for the purposes of the present invention might produce unsatisfactory results.

The flask apparatus according to the present invention has therefore been designed to carry out the process indicated above, and is not suitable for general odontotechny use according to conventional methods.

Use of the apparatus according to the present invention also involves certain practical adjustments to some of the process operations, as well as rendering the w hole operation quicker and more effective, as mentioned above.

For example, both the operations of embedding the original denture respectively for the gum portion using plaster and for the tooth portion using the first polymerizable resin material are performed by direct pouring into the apparatus of the plaster and of the polymerizable material, with the original denture already positioned in the apparatus itself, unlike the process described in the previous application, in which these operations had to be carried out manually, like in conventional flasks, after preparation of a hard plaster base and the subsequent introduction of this base into the flask, after which liquid white scagliola type plaster is poured into it. Equally, the silicon type polymerizable resin was manually molded around the tooth portion, the flask was closed, and then the resin was embedded in a mold of liquid white plaster to fill the flask.

In the apparatus according to the present invention, the use of liquid white plaster is completely eliminated and the material used for the mold, whether hard plaster of polymerizable resin, is poured directly into the apparatus with the original denture in position, giving a notable saving in time and material and increased precision in the resulting product.

An object of the present invention is therefore a flask apparatus for the production of a copy or duplicate of a denture original made up of a tooth portion and a gum portion, said apparatus being characterised by the fact that it comprises a lower mold destined to contain plaster for the mold and impression of the gum portion of the original denture and a top countermold destined to contain silicon type polymerizable material for the mold and impression of the tooth portion of the original denture, and in which the bottom mold and the top countermold have substantially the same volume and have a base with a central aperture, a cylindrical perimeter wall equipped with thickenings arranged at substantially regular distances around the perimeter and a bore running through each of said thickenings from the edge of the wall and the base, the respective bores in the bottom mold and in the top countermold being aligned to allow insertion of a lock bolt, engaging with a thread in the bore on the bottom mold and, respectively, with a housing for the head of the bolt in the top countermold, the thickness of the perimeter wall of the molds growing narrower from the bottom to the edge of the wall to facilitate extraction of the block of material from the mold, at least one of the molds being equipped with centering pins while the other mold is provided with corresponding bores to house said pins for exact centering of the molds, the volume of the bottom mold and of the top countermold being between 50 and 70 cm³ each, preferably 60 cubic centimetres, and the distance between the edge of the perimeter wall and the base being between 21 and 24 mm.

A further object of the present invention is an improved process for the production of a duplicate of an original denture in which the original denture is placed directly in the bottom mold, the dental mold plaster is poured directly into the same bottom mold until the gum portion is covered and, after placing the centred countermold on top of the bottom mold, the polymerizable resin material for the tooth mold is poured directly into the countermold through the central opening in its base.

In this way the apparatus is in an optimum condition both to undergo the pressing operation to expel any excess mold material, and to be introduced into a water polymerizing apparatus at a pressure in excess of atmospheric pressure and at a temperature of over 100°C.

The advantages of the present invention are that the copy of the denture is produced in a shorter time when compared with the process of the Italian patent mentioned above, with a greater copying precision and with a saving of mold material as compared with the description given in the Italian patent mentioned above.

In effect the size of the flask, and in the first place its volume, its compact structure, which allows an effective pressing operation and thus gives perfect adherence of the mold material to the original denture, and its reduced size, which allow polymerisation to be carried out in conventional high pressure and high temperature polymerisation apparatuses, allow the duplicate denture to be produced in a shorter time and with greater precision.

In the process for preparation of the denture copy, the apparatus according to the present invention is naturally suitable to be used both during the phase in which the plaster and silicon polymer molds are prepared using the original denture, and during the stage in which the copy itself is produced by polymerisation of known resins of methacrylic type to reproduce the teeth and the gum base of the copy.

What is more, a further advantage of the present invention is that all the operations can be carried out without ever having to remove the impressions from the molds, which prevents any risk of deformation of the impressions and ensures working precision.

Using a conventional flask, on the contrary, it was at least necessary to remove the block of silicon resin in order to access the shape of the dental arch, fill the shape with methacrylic resin and carry out photo-polymerisation.

The invention will now be described with reference to the enclosed drawings, in which:

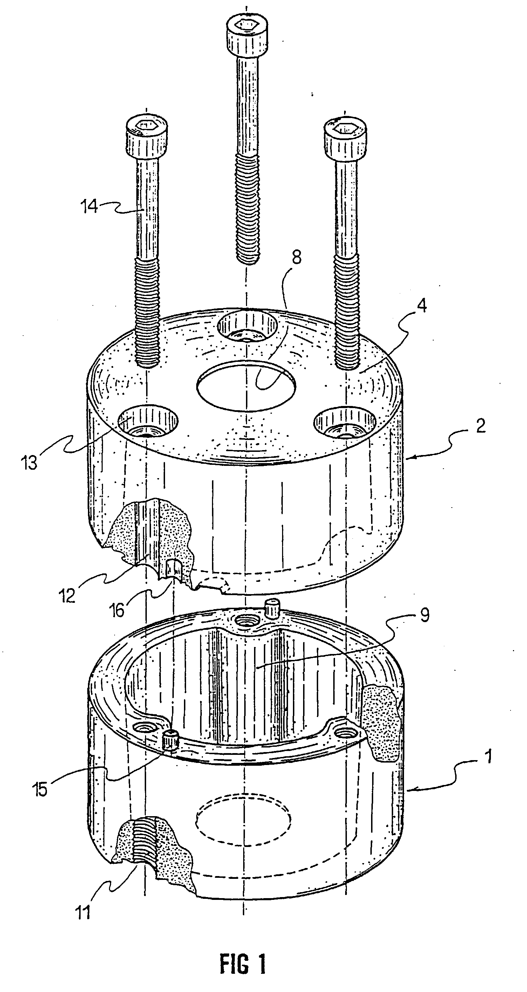

figure 1 shows an exploded and partially cross-section view of the flask apparatus according to the present invention;
figure 1 is a bottom view of the top countermold;
figure 3 is a top view of the bottom mold;
figure 4 is a top view of the top countermold;
figure 5 is a bottom view of the bottom mold;
figure 6 shows the original denture in the bottom mold;
figure 7 shows the flask closed and filled;
figure 8 illustrates extraction of the original denture;
figures 9, 10 and 11 show formation of the denture copy; and
figure 12 shows the final stage of preparation of the copy.

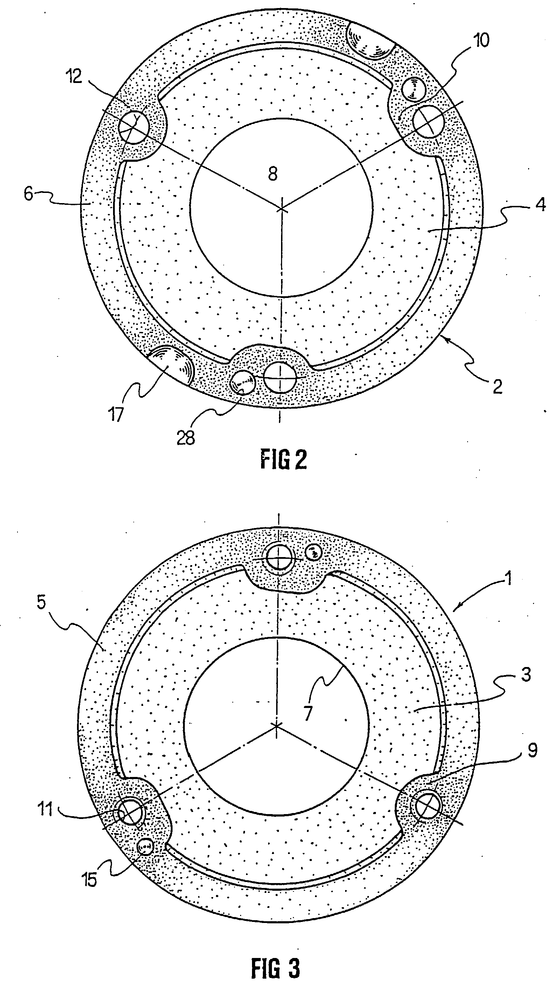

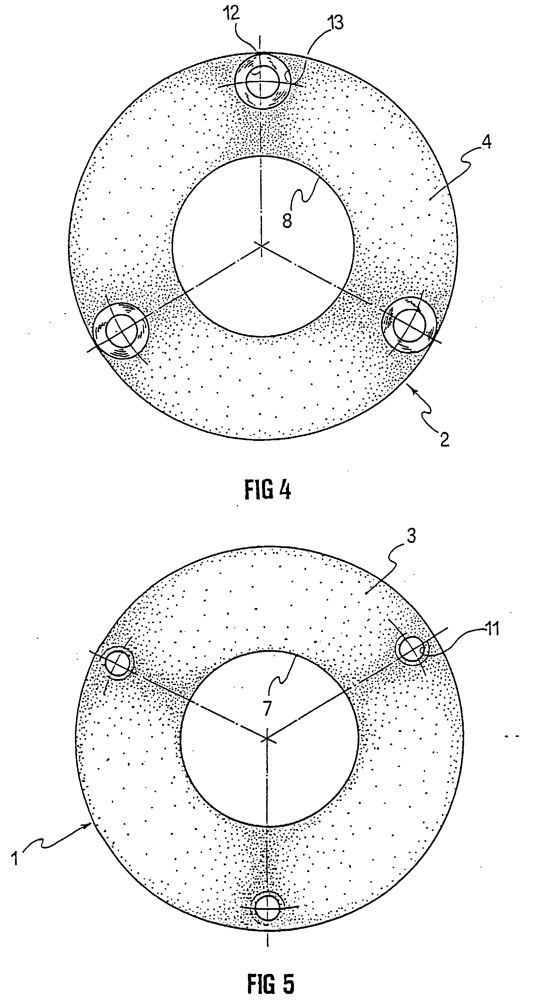

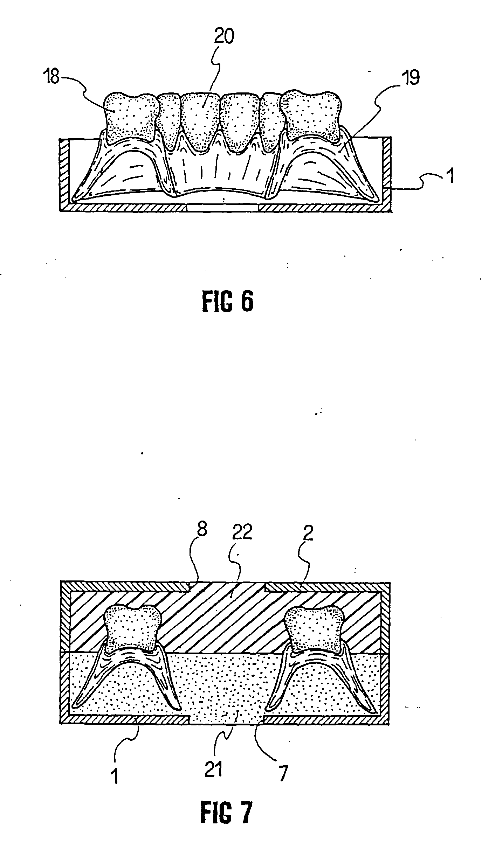

Figures 1 to 5 show the flask apparatus according to the present invention and figures 6 to 12 show its use in the duplication process of an original denture.

The apparatus comprises a bottom mold 1 and a top countermold 2, formed by a base 3 and 4, respectively, and a substantially cylindrical perimeter wall 5 and 6, respectively. The base 3, 4 has a preferably, but not necessarily, central opening 7, 8, respectively, which for the purposes of the process serves to push out the mold material (plaster or polymerisable resin) as will be described in the following.

The perimeter walls 5, 6 have a certain number of thickened areas 9. 10, respectively, through which pass bores 11, 12, respectively. The bores 12 in the top countermold 2 are widened on the base 4, as indicated by 13, to house the head of bolts 14 which pass through the bore 12 and screw into a thread in the bore 11. The bores 11 and 12 are aligned to allow the bolt to pass. The bolt 14 can also come out through the base 3 and be further fixed by means of a nut in contrast with the base itself (not shown). To give perfect centering of the two molds, pins 15 are provided, for example on the bottom mold 1, capable of engaging with corresponding hollows 16 on the edge of the opposite mold, for example the countermold 2.

Exact centering of the molds serves to assemble them correctly, and to enable locking by means of bolts 14.

On the edge of the perimeter wall, for example of the top countermold 2, slots 17 are formed, which serve to facilitate separation of the flask by means of insertion of a mechanical tool.

The perimeter walls 5, 6, respectively, are for preference slightly conical in shape, narrowing from the bottom towards the edge of the wall, to facilitate extraction of the material in the mold when pushed upward through opening 7, 8 in the base at the end of the process.

With reference to figures 7 to 12, the use of the apparatus according to the invention in the process for production of a denture duplicate will now be described.

Figure 6 shows an original denture 18 made up of a gum portion 19 and a tooth portion 20. The original 18 is positioned in the bottom mole 1, into which is poured a material for use in dental molds, preferably hard plaster, until reaching the level of the bottom of the teeth, as indicated in 21 in figure 7. Obviously during the operation of pouring the plaster 21 the mold 1 is rested on a flat surface to prevent the plaster from running out through the opening 7 in the base.

The top countermold 2 is then fastened onto the mold 1, centering it as indicated above. Through the central opening 8 in the base of the countermold 2 a first polymerizable resin material 22 is then poured, preferably of a silicon type, to completely embed the tooth part 20 of the original 18 to obtain an imprint of the dental arch. With the mold material still fresh, the complex is placed in a press of the type used in odontotechny, preferably an hydraulic press, to obtain perfect adherence between the original and the mold materials, any excess of the latter being forced out through the central openings 7 and 8 in the molds.

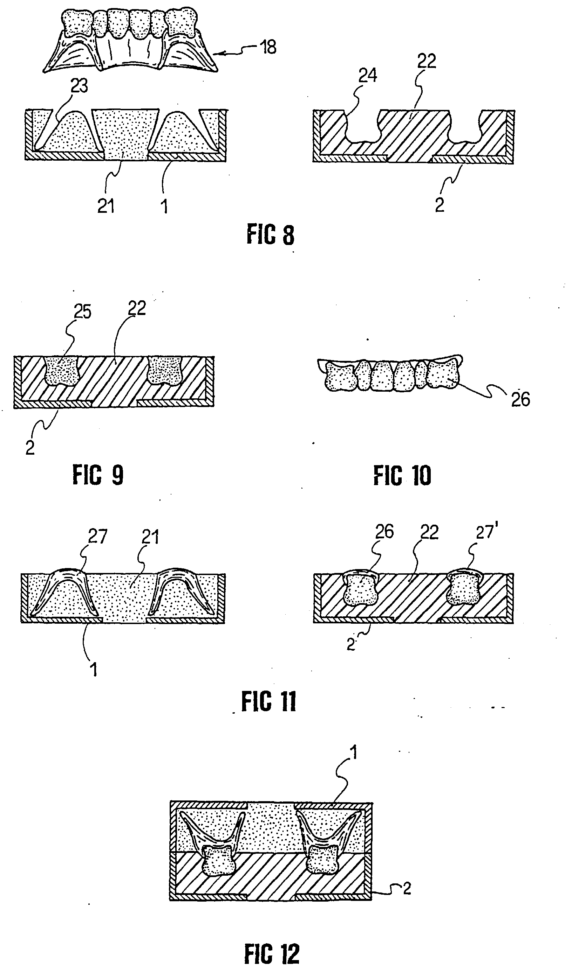

When hardening of the plaster and the polymerizable material is completed, as shown in figure 8, the flask is opened again, the original 18 is extracted and returned to the user and there remain inside the mold 1 and the countermold 2, respectively, the plaster imprint 23 of the gum portion and the imprint 24 made of the polymer 22 of the dental arch.

Figures 9, 10 and 11 show the subsequent developments in preparation of the denture duplicate.

To prepare the teeth, keeping the silicon material 22 inside the countermold 2, the imprint 24 is filled with a second polymerizable resin of the type normally used for the construction of false teeth in resin, which is made up of powders and liquids that are mixed together and is well known in the field of odontotechny. The resin is preferably a resin for bridges and crowns for use in pressure polymerizing machines normally used in the trade, for example IVOCRON manufactured by the German company IVOCLAR in a machine such as IVOMAT.

After polymerisation has been completed, the dental arch obtained, indicated with 26 in figure 10, and the teeth obtained are separated by cutting them with a circular metal saw of the type used in odontotechny to free them from any excess material that does not form part of the teeth themselves.

The teeth 26 obtained in this way are relocated in the silicon imprint 22 to reform the dental arch of the denture duplicate (figure 11). Figure 11 also shows the mold 1 with the plaster imprint 23 of the gum portion, which is filled with a third polymerizable resin 27, which is also used to fill in the spaces left between the teeth in the imprint 24 of silicon material 22 in the countermold 2. This type of resin is well known in the field of odontotechny and an example is the polymethylmethacrylate based resin Meliodent, manufactured by the Germany company Bayer.

At this point the two parts of the flask, mold 1 and countermold 2, are closed up and locked in the hydraulic press mentioned above, to allow perfect adherence of the third resin to the respective imprints. The flask is then locked by insertion of the bolts 14 in their respective bores 11, 12 and locking of said bolts, so that the contents of the flask cannot move. The flask, locked in this manner, is then placed in a hot polymerisation device, preferably a device of the type IVOMAT manufactured by IVOCLAR, in which polymerisation takes place at a temperature not exceeding 105°C and at a pressure of approximately 1.2 bar (figure 12).

It must be noted that the structure of the flask device according to the invention allows it to be used in a commercial machine of this type, which is normally available in odontotechny laboratories, whereas use of conventional flasks in these machines is not possible. The use of the apparatus according to the invention in polymerizing machines of this type allows considerable shortening of the waiting time required for complete polymerisation of the duplicate denture.

It should be noted in this regard that, as the size of an human dental arch remain within certain dimensions, use of the invention has made it possible to carry out a process such as the one described above with extraordinary precision and in an extremely short time when compared with the time normally required for construction of a conventional denture duplicate. In effect, the flask apparatus according to the invention, by means of an original combination of structural and dimensional elements, is able, in a surprisingly simple manner, to provide an excellent product in a manner that is reproducible and can easily be adapted to automatic operating methods.

The preferred and balanced dimensions of the apparatus according to the invention foresee a volume capacity of between 50 and 70 cm³, preferably of approximately 60 cm³, with a distance between the edge of the perimeter wall and the base of between 21 and 24 mm.

## Claims

1. A flask apparatus for the production of a copy or duplicate of a denture original, made up of a tooth portion and a gum portion,
characterised in that it comprises a bottom mold (1) destined to contain plaster for the mold (21) and imprint (23) of the gum portion (19) of the original denture (18), and a top countermold (2) destined to hold a first polymerizable material for the mold (22) and imprint (24) of the tooth portion of said original denture, and in which
said bottom mold and said top countermold are containers of substantially equal capacity, having a base (3, 4) with an opening (7, 8), a cylindrical perimeter wall (5, 6) provided with thickenings (9) spaced around the perimeter in a substantially regular manner, and a bore (11) passing through each thickening from the edge of the wall to the base,
the respective bores in the bottom mold and in the top countermold being aligned to allow insertion of a lock bolt (14) to engage with a thread in the bore in the bottom mold and with a hollow (13) for the head of the bolt in said top countermold,
at least one of said molds being provided with centering pins (15) and the other mold with corresponding bores (28) to hold said pins to give exact centering of the molds.

2. An apparatus according to claim 1, in which
the thickness of the perimeter wall of said molds decreases from the base upwards to the edge of the wall to facilitate extraction of the mold blocks from the mold.

3. An apparatus according to claim 1 or 2, in which the volume capacity of each of said bottom mold and top countermold is between 50 and 70 cm³, preferably 60 cm³, and the distance from the edge of the perimeter wall and the base is between 21 and 24 mm.

4. An apparatus according to any one of the preceding claims, in which said bolts (14) extend beyond the base of the mold (1) and are locked to said base by means of nuts.

5. An apparatus according to any one of the preceding claims, in which slots (17) are formed on the edge of the perimeter wall of the top countermold to facilitate detachment of the molds using a mechanical tool on completion of the operation of hardening the cast.

6. An apparatus according to any one of the preceding claims, in which said molds are made by casting in aluminium/zinc alloy.

7. A process for the production of a copy or duplicate of an original denture made up of a tooth portion and a gum portion, in which starting from the original denture an imprint is made in plaster of the gum portion and an imprint is made in a first polymer of the tooth portion, the dental arch is reproduced in the imprint of the tooth portion by polymerizing therein a second polymerizable material for artificial teeth, the single teeth in the arch are separated and cleaned, the artificial teeth are once again arranged in their imprint, a third polymerizable resin material is inserted on them and in the imprint of the gum portion to form the gum portion, and the two parts are joined together and the resin polymerised,
characterised in that it comprises the following operations:
use of an apparatus as defined in any of the preceding claims;
placing of said original denture (18) with its gum portion (19) resting on the base of said bottom mold (1) of the flask;
pouring plaster for dental casts into said bottom mold until covering said gum portion to form a plaster mold (21) of said gum portion containing an imprint (23) thereof;
arranging the top countermold (2) on top of the bottom mold in its centred position so as to close the flask;
pouring into the top countermold, through the opening in its base, said first polymerizable resin material until said top mold is completely filled, thus covering the tooth portion of said original; and
after having arranged the third polymerizable resin material in the imprints of the gum portion and the tooth portion, locking the two molds of the flask into position by screwing up said bolts into said threaded bores (11, 12) in the bottom mold and arranging the flask, locked in such a way, in an apparatus for polymerisation by immersion in pressurised water at a temperature exceeding 100°C to polymerise said third resin material to form the gum portion joined to the tooth portion.

8. A process according to claim 7, in which said polymerisation of the third resin material is carried out in pressurised water at a temperature of approximately 105°C and at a pressure of approximately 1.2 bar for a period of approximately 15 minutes.

9. A process according to claim 7 or 8, in which pressing of said flask is carried out in an hydraulic press at approximately 2 atmospheres.
